# EUROPÄISCHE PATENTSCHRIFT

(11) **EP 3 221 083 B1**
(45) Veröffentlichungstag und Bekanntmachung des Hinweises auf die Patenterteilung: **18.07.2018**
(21) Anmeldenummer: 15797088.0
(22) Anmeldetag: 18.11.2015
(51) Int. Cl.: F16H 3/32

(54) **BEARBEITUNGSEINHEIT FÜR EINE WERKZEUGMASCHINE UND WERKZEUGMASCHINE MIT EINER DERARTIGEN BEARBEITUNGSEINHEIT**
MACHINING UNIT FOR A MACHINE TOOL AND MACHINE TOOL HAVING SUCH A MACHINING UNIT
UNITÉ D'USINAGE POUR MACHINE-OUTIL ET MACHINE-OUTIL COMPRENANT UNE UNITÉ D'USINAGE DE CE TYPE

(30) Priorität: 20.11.2014 DE 102014223757
(43) Veröffentlichungstag der Anmeldung: 27.09.2017
(73) Patentinhaber: DECKEL MAHO Pfronten GmbH, 87459 Pfronten (DE)
(72) Erfinder: KÖCHL, Roland, A-6682 Vils (AT); RINDERLE, Martin, 87474 Buchenberg (DE)
(74) Vertreter: MERH-IP Matias Erny Reichl Hoffmann Patentanwälte PartG mbB
(86) Internationale Anmeldenummer: PCT/EP2015/076978
(87) Internationale Veröffentlichungsnummer: WO 2016/079188

(56) Entgegenhaltungen:
- EP-A1- 0 664 176
- EP-A1- 1 415 758
- WO-A1-2006/032936

## Beschreibung

Die vorliegende Erfindung betrifft eine Bearbeitungseinheit für eine Werkzeugmaschine und eine Werkzeugmaschine mit einer derartigen Bearbeitungseinheit.

### HINTERGRUND DER ERFINDUNG

Gattungsgemäße aus dem Stand der Technik bekannte Bearbeitungseinheiten umfassen zumeist einen an der Werkzeugmaschine anbringbaren Kopfträger, einen an dem Kopfträger um einen Schwenkachse schwenkbar gehaltenen Schwenkkopf, eine an dem Schwenkkopf angeordnete Arbeitsspindel mit einer relativ zu der Schwenkachse geneigten Spindelachse, einen in dem Kopfträger angeordneten Spindelmotor, der eine koaxial zu der Schwenkachse angeordnete Antriebswelle aufweist, und ein Antriebsgetriebe zum Übertragen der Drehbewegung der Antriebswelle des Spindelmotors auf die Arbeitsspindel, wobei das Antriebsgetriebe eine schaltbare Getriebestufe aufweist.

Beispielhaft sei hierbei auf die gattungsgemäße Bearbeitungseinheiten hingewiesen, die aus der DE 44 02 084 A1 (EP-0664176A1) oder der DE 102 51 257 A1 bekannt sind.

DE 44 02 084 A1 beschreibt eine Werkzeugmaschine, insbesondere Universal-Fräs- und Bohrmaschine, die einen Schwenkfräskopf zum automatischen Umrüsten von einer Horizontal- auf eine Vertikalbearbeitung aufweist. Der Antrieb der Arbeitsspindel erfolgt durch einen Antriebsmotor über ein Antriebsgetriebe mit einer Kegelradstufe und einem Schaltgetriebe, welches im Schwenkfräskopf an der Arbeitsspindel angeordnet ist, wobei das Kegelradgetriebe der Kegelradstufe unmittelbar an der Antriebswelle des Antriebsmotors der Spindel sitzt.

In der DE 102 51 257 A1 wurde zur Weiterbildung der Werkzeugmaschine (Universal-Fräs- und Bohrmaschine) gemäß der DE 44 02 084 A1 eine Bearbeitungseinheit für eine programmgesteuerte Werkzeugmaschine vorgeschlagen, die aufweist: einen in mehreren Koordinatenachsen verfahrbaren Kopfträger, der eine um 45 Grad nach vorne unten weisende Drehachse aufweist, einem stirnseitig am Kopfträger um die 45-Grad-Drehachse motorisch verdrehbar angeordneten Schwenkkopf, einem am Schwenkkopf fest montierten Spindelkopf mit einer Arbeitsspindel, deren Achse unter einem Winkel von 45 Grad zur 45-Grad-Drehachse verläuft, einem koaxial zur 45-Grad-Drehachse ausgerichteten Spindelmotor und einem im Schwenkkopf angeordneten Winkelgetriebe für den Spindelantrieb, wobei der Schwenkkopf einen zur 45-Grad-Drehachse koaxialen hohlzylindrischen Gehäuseteil aufweist, in dem der Spindelmotor befestigt ist, und der Kopfträger einen Gehäuseansatz aufweist, in welchem der Gehäuseteil des Schwenkkopfes drehbar gelagert ist.

Ausgehend von dem vorstehend genannten Stand der Technik ist es eine Aufgabe der vorliegenden Erfindung, eine Bearbeitungseinheit für eine Werkzeugmaschine bzw. eine Werkzeugmaschine mit einer derartigen Bearbeitungseinheit zu schaffen bzw. die bekannten Bearbeitungseinheiten für eine Werkzeugmaschine derart weiterzubilden, dass bei hoher Steifigkeit, geringerem Platzbedarf und geringerem konstruktiven Aufwand ein optimaler Kraftfluss und eine optimale Drehmomentübertragung über ein schaltbares Getriebe auf die Arbeitsspindel gewährleistet ist, und gleichzeitig die Bauteile der Bearbeitungseinheit für Wartung und Pflege leicht zugänglich angeordnet sind und eine flexible und zuverlässige Zuführungsleitung zum Schwenkkopf bzw. zur Spindel ermöglicht ist.

### ZUSAMMENFASSUNG DER ERFINDUNG

Zur Lösung der vorstehend genannten Aufgabe der vorliegenden Erfindung wird eine Bearbeitungseinheit für eine Werkzeugmaschine gemäß Anspruch 1 bzw. eine Werkzeugmaschine mit einer derartigen Bearbeitungseinheit vorgeschlagen. Abhängige Ansprüche betreffen bevorzugte Ausführungsbeispiele der vorliegenden Erfindung.

Gemäß einem Aspekt der Erfindung wird eine Bearbeitungseinheit für eine Werkzeugmaschine vorgeschlagen, umfassend: einen an der Werkzeugmaschine anbringbaren Kopfträger, einen an dem Kopfträger um einen Schwenkachse schwenkbar gehaltenen Schwenkkopf, eine an dem Schwenkkopf angeordnete Arbeitsspindel mit einer relativ zu der Schwenkachse geneigten Spindelachse, einen in dem Kopfträger angeordneten Spindelmotor, der eine parallel zu der Schwenkachse angeordnete Antriebswelle aufweist, und/oder ein Antriebsgetriebe zum Übertragen der Drehbewegung der Antriebswelle des Spindelmotors auf eine Antriebswelle der Arbeitsspindel, wobei das Antriebsgetriebe eine schaltbare Getriebestufe aufweist, insbesondere um unterschiedliche Übersetzungen im Spindelantrieb gemäß zwei oder mehr Antriebsgängen bereitzustellen.

Die Bearbeitungseinheit gemäß der vorliegenden Erfindung ist insbesondere dadurch gekennzeichnet, dass der Schwenkkopf eine Schaltgetriebeachse aufweist, die koaxial mit der Schwenkachse des Schwenkkopfs ausgerichtet ist, wobei die schaltbare Getriebestufe eine auf der Schaltgetriebeachse des Schwenkkopfs verschiebbar gelagerte Hohlwelle aufweist.

Hierbei ergibt sich eine besonders effiziente platzsparende, steife und für verschiedene Drehmomente bei optimaler Drehmomentübertragung auslegbare Anordnung, bei der nicht die Antriebswelle des Spindelmotors koaxial mit der Schwenkachse des Schwenkkopfs ausgerichtet wird, sondern eine Schaltgetriebeachse des Antriebsgetriebes im Schwenkkopf koaxial mit der Schwenkachse des Schwenkkopfs ausgerichtet wird, auf der zum Bereitstellen einer Schaltmöglichkeit des Antriebsgetriebes eine auf der Schaltgetriebeachse verschiebbare bzw. verfahrbare Hohlwelle der schaltbaren Getriebestufe gelagert wird.

Dies ermöglicht es nicht nur vorteilhaft eine präzise und kompakt ausgestaltete Schaltmöglichkeit des Antriebsgetriebes des Spindelantriebs mit unterschiedlichen Übersetzungen bereitzustellen, sondern ermöglicht es zudem vorteilhaft, den Spindelmotor im Inneren des Kopfträgers versetzt zur Schwenkachse anzuordnen, wodurch im Inneren des Kopfträgers Anordnungen der Bauteile ermöglicht werden, bei denen sowohl der Antriebsmotor der drehbar gesteuerten Schwenkachse als auch der Spindelmotor sowie die Getriebeteile des Antriebs der drehbar gesteuerten Schwenkachse im Inneren des Kopfträgers für Wartung und Pflege einfach zugänglich angeordnet werden können.

Weiterhin ist es effizient und platzsparend möglich, Zuführungsleitungen bzw. Zuführungsrohre (z.B. für Energiezuführungen bzw. zudem Hydraulik- und/oder Pneumatikzuführungen als auch Kühlmittelzuführungen) zu dem Schwenkkopf, die z.B. in der Bearbeitungseinheit der DE 102 51 257 A1 noch außenseitig, d.h. beschädigungs- bzw. verschleißanfällig außerhalb des Kopfträgergehäuses angeordnet werden mussten, nunmehr optimal innerhalb des Kopfträgergehäuses anzuordnen, wodurch die Zuführungsleitungen besser vor Beschädigungen und Verschleiß geschützt werden können.

Insbesondere aufgrund des ermöglichten Versatzes des Spindelmotors relativ zur Schwenkachse können die Zuführungsleitungen im Inneren des Kopfträgergehäuses näher an der Schwenkachse zu dem Schwenkkopf geführt werden, so dass die Berücksichtigung des Einflusses der Verschwenkbarkeit auf die Führungen vereinfacht wird.

Gemäß einer bevorzugten Ausführungsform ist die schaltbare Getriebestufe vorzugsweise dazu eingerichtet, das Antriebsgetriebe zwischen einem ersten Antriebsgang und einem zweiten Antriebsgang zu schalten, insbesondere bei unterschiedlichen Übersetzungen, vorzugsweise indem die verschiebbar gelagerte Hohlwelle auf der Schaltgetriebeachse parallel zur Schwenkachse zwischen einer ersten Position und einer zweiten Position verschoben wird.

Vorzugsweise ist hierbei der erste Antriebsgang eingenommen, wenn die verschiebbar gelagerte Hohlwelle die erste Position einnimmt, und der zweite Antriebsgang ist vorzugsweise eingenommen, wenn die verschiebbar gelagerte Hohlwelle die zweite Position einnimmt. In weiteren Ausführungsformen ist es möglich weitere Zwischenpositionen einzuführen, so dass drei oder mehr Gänge verfügbar werden.

In einer besonders bevorzugten und zweckmäßigen Ausführungsform weist die Schaltgetriebeachse einen ersten Achsabschnitt, einen zweiten Achsabschnitt und einen zwischen dem ersten Achsabschnitt und dem zweiten Achsabschnitt angeordneten Kolbenabschnitt auf, wobei der Kolbenabschnitt vorzugsweise einen größeren Durchmesser aufweist als der erste Achsabschnitt und der zweite Achsabschnitt. Vorzugsweise weist die schaltbare Getriebestufe weiterhin einen in der Hohlwelle angeordneten Zylindermantel auf, in dem der Kolbenabschnitt vorzugsweise verschiebbar dichtend gelagert ist.

Bei einer derartigen Anordnung kann eine kompakte und zuverlässige pneumatische und/oder hydraulische Schaltungssteuerung ermöglicht werden, bei der der pneumatisch bzw. hydraulisch verschiebbare Kolben bzw. Kolbenabschnitt in einem Zylindermantel kompakt, zuverlässig und einfach im Innern der schaltbaren Baueinheit mit Hohlwelle und Schaltgetriebeachse integriert sein kann und keine zusätzlichen, platzraubenden Pneumatik- und/oder Hydraulikzylinder erforderlich sind.

Hierbei ist mit "verschiebbar dichtend" insbesondere gemeint, dass der Zylindermantel und der Kolbenabschnitt relativ zueinander verschiebbar sind, jedoch derart, dass zwischen dem Kolbenabschnitt und dem Zylindermantel dennoch eine pneumatische und/oder hydraulische Dichtung vorliegt bzw. bei Verschieben aufrechterhalten wird. Diese Ausführungsform hat insbesondere den Vorteil, dass das Verschieben des Zylindermantels relativ zu dem Kolbenabschnitt zum Schalten der schaltbaren Getriebestufe auf einfache Weise pneumatisch bzw. hydraulisch erfolgen kann, indem pneumatisch und/oder hydraulisch Druckunterschiede auf den beiden Seiten des Kolbenabschnitts erzeugt werden.

Insbesondere zur weiteren optimierten Abdichtung und auch zur Stützung bzw. Lagerung der Hohlwelle mittels einer einfachen und kompakten Ausführung wird eine weitere bevorzugte Ausgestaltung vorgeschlagen, in der vorzugsweise ein erster Dichtkopf an einem ersten Ende des Zylindermantels befestigt ist und auf dem ersten Achsabschnitt der Schaltgetriebeachse vorzugsweise verschiebbar dichtend gelagert ist, und/oder vorzugsweise ein zweiter Dichtkopf an einem zweiten Ende des Zylindermantels befestigt ist und auf dem zweiten Achsabschnitt der Schaltgetriebeachse vorzugsweise verschiebbar dichtend gelagert ist. Bevorzugt kann hierbei die Hohlwelle auf dem ersten Dichtkopf und/oder auf dem zweiten Dichtkopf drehbar gelagert sein.

Gemäß einer weiteren bevorzugten Ausführungsform weist der erste Achsabschnitt vorzugsweise einen axial verlaufenden ersten Kanal und der zweite Achsabschnitt vorzugsweise einen axial verlaufenden zweiten Kanal auf, wobei erste Kanalöffnungen des ersten Achsabschnitts vorzugsweise den ersten Kanal mit einem Zwischenraum zwischen dem Zylindermantel, dem Kolbenabschnitt, dem ersten Achsabschnitt und/oder dem ersten Dichtkopf verbinden, und/oder zweite Kanalöffnungen des zweiten Achsabschnitts vorzugsweise den zweiten Kanal mit einem Zwischenraum zwischen dem Zylindermantel, dem Kolbenabschnitt, dem zweiten Achsabschnitt und/oder dem zweiten Dichtkopf verbinden. Vorzugsweise ist die schaltbare Getriebestufe hierbei insbesondere dazu eingerichtet, durch hydraulisch und/oder pneumatisch erzeugte Druckdifferenzen zwischen dem ersten und dem zweiten Kanal bzw. dadurch erzeugte Druckdifferenzen zwischen den beiden Zwischenräumen geschalten zu werden.

In einer weiteren zweckmäßigen und bevorzugten Ausführung weist das Antriebsgetriebe vorzugsweise eine Schieberadsatz-Getriebestufe mit einem zwei Stirnräder umfassenden Schieberadsatz auf, wobei ein erstes Stirnrad des Schieberadsatzes vorzugsweise drehfest auf der Antriebswelle des Spindelmotors angeordnet ist und ein in das erste Stirnrad eingreifendes zweites Stirnrad des Schieberadsatzes vorzugsweise drehfest auf der verschiebbar gelagerten Hohlwelle angeordnet ist.

In einer weiteren zweckmäßigen und bevorzugten Ausführung weist die schaltbare Getriebestufe vorzugsweise ein erstes Stirnradpaar für einen ersten Getriebegang und/oder ein zweites Stirnradpaar für einen zweiten Getriebegang auf, insbesondere bei unterschiedlicher Übersetzung. Das erste Stirnradpaar weist vorzugsweise ein drittes Stirnrad auf, das vorzugsweise drehfest auf der verschiebbar gelagerten Hohlwelle angeordnet ist, und/oder das zweite Stirnradpaar umfasst vorzugsweise ein viertes Stirnrad, das vorzugsweise drehfest auf der verschiebbar gelagerten Hohlwelle angeordnet ist. Alternativ kann das erste Stirnradpaar beispielsweise das zweite Stirnrad umfassen, und das zweite Stirnradpaar ein viertes Stirnrad umfassen, das drehfest auf der verschiebbar gelagerten Hohlwelle angeordnet ist.

In einer weiteren zweckmäßigen und bevorzugten Ausführung greifen die Stirnräder des ersten Stirnradpaars vorzugsweise dann ineinander, wenn die verschiebbar gelagerte Hohlwelle die erste Position einnimmt, und die Stirnräder des zweiten Stirnradpaars greifen vorzugsweise dann ineinander, wenn die verschiebbar gelagerte Hohlwelle die zweite Position einnimmt.

In einer weiteren zweckmäßigen und bevorzugten Ausführung weist der Schwenkkopf vorzugsweise eine Zwischenwelle auf, die vorzugsweise parallel mit der Schwenkachse des Schwenkkopfs ausgerichtet ist. Vorzugsweise weist das Antriebsgetriebe eine Kegelrad-Getriebestufe auf, wobei ein erstes Kegelrad der Kegelrad-Getriebestufe vorzugsweise drehfest auf der Zwischenwelle angeordnet ist. Vorzugsweise ist ein zweites Kegelrad der Kegelrad-Getriebestufe zum Antreiben der Arbeitsspindel vorzugsweise drehfest auf der Antriebswelle der Arbeitsspindel angeordnet. Vorzugsweise umfasst das erste Stirnradpaar ein fünftes Stirnrad, das vorzugsweise drehfest auf der Zwischenwelle angeordnet ist, und/oder das zweite Stirnradpaar umfasst vorzugsweise ein sechstes Stirnrad, das vorzugsweise drehfest auf der Zwischenwelle angeordnet ist.

In einer weiteren zweckmäßigen und bevorzugten Ausführung weist der Schwenkkopf ein Schwenkachsen-Zahnrad auf, das vorzugsweise koaxial mit der Schwenkachse angeordnet ist, und die Bearbeitungseinheit weist vorzugsweise einen an dem Kopfträger angeordneten Drehachsmotor und/oder eine oder mehrere vorzugsweise mit dem Schwenkachsen-Zahnrad in Eingriff stehende Getriebeeinheiten zum Übertragen der Drehbewegung einer Antriebswelle des Drehachsmotors auf das Schwenkachsen-Zahnrad auf, wobei die eine oder mehreren Getriebeeinheiten vorzugsweise über einen gemeinsamen Zahnriemen angetrieben werden, der sich vorzugsweise mit einem Zahnrad auf der Antriebswelle des Drehachsmotors in Eingriff befindet.

Vorzugsweise weist die Bearbeitungseinheit insbesondere zwei mit dem Schwenkachsen-Zahnrad in Eingriff stehende Getriebeeinheiten zum Übertragen der Drehbewegung der Antriebswelle des Drehachsmotors auf das Schwenkachsen-Zahnrad auf, wobei die beiden Getriebeeinheiten vorzugsweise über den gemeinsamen Zahnriemen angetrieben werden, wobei jede der beiden Getriebeeinheiten vorzugsweise eine jeweilige Hauptachse aufweist, die vorzugsweise parallel zu der Antriebswelle des Drehachsmotors angeordnet ist, wobei die beiden Hauptachsen und die Antriebswelle des Drehachsmotors vorzugsweise im Wesentlichen gleichbeabstandet zueinander angeordnet sind, vorzugsweise derart, dass der Zahnriemen im Wesentlichen eine einem gleichseitigen Dreieck entsprechende Form annimmt.

Vorzugsweise ist der Drehachsmotor auf der der Schwenkachse abgewandten Seite der einen oder mehreren Getriebeeinheiten angeordnet, und/oder vorzugsweise sind der Drehachsmotor und der Spindelmotor relativ zueinander vorzugsweise auf gegenüber-liegenden Seiten der Schwenkachse angeordnet.

Vorzugsweise ist die Antriebswelle des Drehachsmotors parallel zu der Schwenkachse angeordnet, und vorzugsweise spannen die Antriebswelle des Drehachsmotors und die Antriebswelle des Spindelmotors vorzugsweise mit der Schwenkachse eine gemeinsame Ebene auf, und vorzugsweise ist die Schwenkachse zwischen den beiden Antriebswellen angeordnet.

Vorzugsweise weist der Kopfträger ein Kopfträgergehäuse und ein vorzugsweise im Inneren des Kopfträgergehäuses zu dem Schwenkkopf verlaufendes Zuführungsrohr bzw. Zuführungsleitung auf. Hierbei ist das Zuführungsrohr bzw. die Zuführungsleitung vorzugsweise zwischen dem Spindelmotor und dem Drehachsmotor angeordnet.

Gemäß einer weiteren Ausgestaltung der Erfindung wird eine Werkzeugmaschine mit einer Bearbeitungseinheit gemäß einer der vorstehenden Ausführungen vorgeschlagen, wobei die Bearbeitungseinheit vorzugsweise in zumindest einer Koordinatenachse bzw. sogar zwei oder drei Koordinatenachsen verfahrbar an der Werkzeugmaschine angebracht.

### KURZBESCHREIBUNG DER FIGUREN

Fig. 1 zeigt beispielhaft eine schematische Darstellung eines Spindelantriebs einer Bearbeitungseinheit gemäß einem Ausführungsbeispiel der Erfindung,
Fig. 2 zeigt beispielhaft eine Perspektivdarstellung eines Spindelantriebs einer Bearbeitungseinheit gemäß einem Ausführungsbeispiel der Erfindung,
Fig. 3A zeigt beispielhaft eine Perspektivdarstellung des Spindelantriebs gemäß Fig. 2 in einem ersten Antriebsgang mit der Arbeitsspindel in horizontaler Stellung und Fig. 3B zeigt beispielhaft eine Perspektivdarstellung des Spindelantriebs gemäß Fig. 2 in einem zweiten Antriebsgang mit der Arbeitsspindel in horizontaler Stellung,
Fig. 4A zeigt beispielhaft eine Perspektivdarstellung des Spindelantriebs gemäß Fig. 2 mit der Arbeitsspindel in vertikaler Stellung und Fig. 4B zeigt beispielhaft eine Perspektivdarstellung des Spindelantriebs gemäß Fig. 2 mit der Arbeitsspindel in horizontaler Stellung,
Fig. 5A zeigt beispielhaft eine Schnittdarstellung einer schaltbaren Getriebestufe gemäß einem Ausführungsbeispiel der Erfindung in einem ersten Antriebsgang und Fig. 5B zeigt beispielhaft eine Schnittdarstellung einer schaltbaren Getriebestufe gemäß einem Ausführungsbeispiel der Erfindung in einem zweiten Antriebsgang,
Fig. 6 zeigt beispielhaft eine Schnittdarstellung eines Details der schaltbaren Getriebestufe Figs. 5A und 5B,
Fig. 7A zeigt beispielhaft eine Perspektivdarstellung einer Anordnung der Antriebsmotoren eines Kopfträgers gemäß einem Ausführungsbeispiel der Erfindung, Fig. 7B zeigt beispielhaft eine Perspektivdarstellung eines Drehachsantriebs eines Kopfträgers gemäß einem Ausführungsbeispiel der Erfindung, und Fig. 7C zeigt beispielhaft eine Seitenansicht des Drehachsantriebs gemäß Fig. 7B, und
Fig. 8A zeigt beispielhaft eine Schnittdarstellung einer schaltbaren Getriebestufe gemäß einem weiteren Ausführungsbeispiel der Erfindung in einem ersten Antriebsgang und Fig. 8B zeigt beispielhaft eine Schnittdarstellung einer schaltbaren Getriebestufe gemäß dem weiteren Ausführungsbeispiel der Erfindung in einem zweiten Antriebsgang.

### DETAILLIERTE BESCHREIBUNG DER FIGUREN UND BEVORZUGTER AUSFÜHRUNGSFORMEN DER VORLIEGENDEN ERFINDUNG

Im Folgenden werden Ausführungsbeispiele der vorliegenden Erfindung anhand der beispielhaften Figuren detailliert beschrieben. Die Merkmale der Ausführungsbeispiele sind im Ganzen oder teilweise kombinierbar und vorliegende Erfindung ist in keinster Weise auf die beschriebenen Ausführungsbeispiele beschränkt. In den Zeichnungen werden gleiche bzw. ähnliche Merkmale mit den gleichen Bezugszeichen gekennzeichnet.

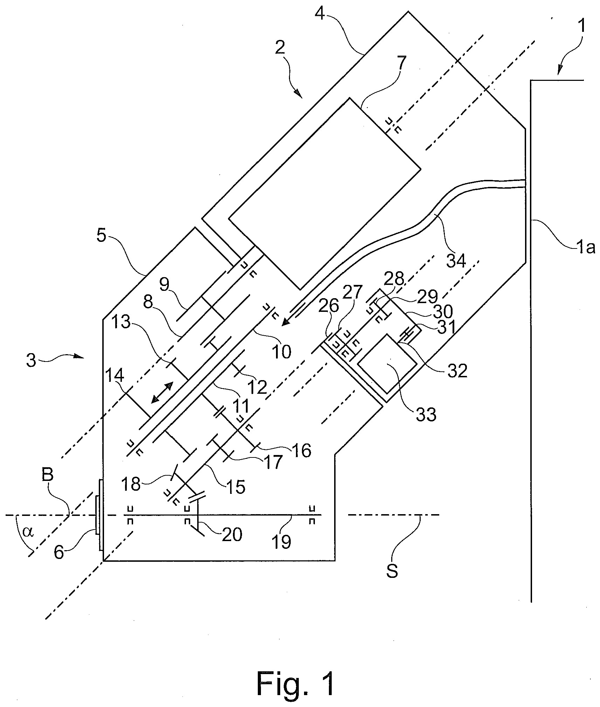

Fig. 1 zeigt beispielhaft eine schematische Darstellung eines Spindelantriebs einer Bearbeitungseinheit gemäß einem Ausführungsbeispiel der Erfindung.

Die Bearbeitungseinheit umfasst einen an der Werkzeugmaschine 1, insbesondere an der Stirnseite 1a eines Maschinenständers der Werkzeugmaschine 1 angebrachten Kopfträger 2 mit einem Kopfträgergehäuse 4, einen an dem Kopfträger 2 um eine Schwenkachse B schwenkbar gehaltenen Schwenkkopf 3 mit einem Schwenkkopfgehäuse 5, und eine an dem Schwenkkopf 3 angeordnete Arbeitsspindel 6 mit einer relativ zu der Schwenkachse B geneigten Spindelachse S, insbesondere beispielhaft um 45 Grad geneigt (Winkel α).

Die Schwenkachse B selbst ist relativ zur Vertikalen bzw. relativ zu der Stirnseite 1a des Maschinenständers der Werkzeugmaschine 1 beispielhaft um 45 Grad nach vorne unten geneigt. Aufgrund der Neigung der Spindelachse S zu der Schwenkachse B kann die Spindelachse S der Spindel 6 horizontal ausgerichtet sein, wie in Fig. 1 dargestellt. Weiterhin kann die Spindelachse S durch Verschwenken des Schwenkkopfs 3 um die Schwenkachse B verschwenkt werden, und bei einem Verschwenken des Schwenkkopfs 3 um die Schwenkachse B um 180 Grad kann die Spindel 6 mit ihrer Spindelachse S für Vertikalbearbeitung vertikal ausgerichtet werden.

Der Kopfträger 2 umfasst im Inneren des Kopfträgergehäuses 4 einen in dem Kopfträger 2 angeordneten Spindelmotor 7 (bzw. Spindelantrieb), der eine parallel zu der Schwenkachse B angeordnete Antriebswelle 8 aufweist, die beispielhaft fliegend gelagert ist (d.h. die Antriebswelle 8 ist in diesem Ausführungsbeispiel schwenkkopfseitig beispielhaft nicht gelagert, sondern beispielhaft nur kopfträgerseitig), und die von dem Kopfträger 4 in den Schwenkkopf 3 hineinragt. Relativ zu der Schwenkachse B ist die Rotationsachse der Antriebswelle 8 des Spindelmotors 7 parallel angeordnet, jedoch beispielhaft nicht koaxial sondern versetzt.

Die Arbeitsspindel 6 weist zudem eine in dem Schwenkkopf 3 drehbar gelagerte Antriebswelle 19 auf, die beispielhaft koaxial mit der Spindelachse S ausgerichtet ist, in weiteren Ausführungen der Erfindung jedoch auch parallel versetzt zur Spindelachse S ausgerichtet sein kann.

Weiterhin beherbergt der Innenraum des Schwenkkopfgehäuses 5 ein Antriebsgetriebe zum Übertragen der Drehbewegung der Antriebswelle 8 des Spindelmotors 7 auf die Antriebswelle 19 der Arbeitsspindel 6.

Das Antriebsgetriebe weist eine Schaltgetriebeachse 10 auf, die koaxial mit der Schwenkachse B des Schwenkkopfs 3 ausgerichtet ist, und auf der eine Hohlwelle 11 einer schaltbaren Getriebestufe zum Schalten des Antriebsgetriebes axial verschiebbar als auch um die Schaltgetriebeachse 10 drehbar gelagert ist.

An dem in den Schwenkkopf 3 hineinragenden Ende der Antriebswelle 8 ist ein längliches Stirnrad 9 drehfest und ortsfest angeordnet zur Bildung eines Verschiebesitzes für das Stirnrad 12, das auf der Hohlwelle 11 des Antriebsgetriebes drehfest und ortsfest angeordnet ist.

Auf der Hohlwelle 11 sind die drei Stirnräder 12, 13 und 14 drehfest und ortsfest angeordnet, wobei das Stirnrad 12 in das auf der Antriebswelle 8 des Spindelmotors 7 drehfest und ortsfest angeordnete Stirnrad 9 kämmend eingreift.

Das Stirnradpaar der Stirnräder 9 und 12 bildet hierbei eine Schieberadsatz-Getriebestufe mit Verschiebesitz, wobei das auf der Hohlwelle 11 angeordnete Stirnrad 12 in das auf der Antriebswelle 8 des Spindelmotors 7 drehfest und ortsfest angeordnete Stirnrad 9 im Eingriff verbleibt, wenn die Hohlwelle 11 in Fig. 1 axial in Richtung der Schaltgetriebeachse 10 verschoben wird (insbesondere in Fig. 1 beispielhaft nach rechts oben).

Das Antriebsgetriebe im Schwenkkopf 3 weist weiterhin eine drehbar gelagerte Zwischenwelle 15 auf, die parallel mit der Schwenkachse B des Schwenkkopfs ausgerichtet ist, jedoch nicht koaxial sondern parallel versetzt. Auf der Zwischenwelle 15 sind die Stirnräder 16 und 17 sowie ein Kegelrad 18 drehfest und ortsfest angeordnet.

Das Kegelrad 18 der Zwischenwelle 15 greift in ein drehfest und ortsfest auf der Antriebswelle 19 der Spindel 6 angeordnetes Kegelrad 20 ein, wobei die Kegelräder 18 und 20 eine Winkelgetriebestufe bilden, die die Antriebsrotation bei einem Winkel von 45 Grad überträgt und so den Winkel α = 45 Grad zwischen der Spindelachse S und der Drehachse B ausgleicht.

Die schaltbare Getriebestufe an der Schaltgetriebeachse 10 mit der axial verschiebbar gelagerten Hohlwelle ist dazu eingerichtet, das Antriebsgetriebe des Schwenkkopfs 3 zwischen einem ersten Antriebsgang und einem zweiten Antriebsgang mit unterschiedlichen Übersetzungen zu schalten, indem die axial verschiebbar gelagerte Hohlwelle 11 auf der Schaltgetriebeachse 10 parallel zur Schwenkachse B zwischen einer ersten Position und einer zweiten Position verschoben wird.

Der erste Antriebsgang ist eingenommen bzw. geschaltet, wenn die verschiebbar gelagerte Hohlwelle 11 die erste Position einnimmt, und der zweite Antriebsgang ist eingenommen bzw. geschaltet, wenn die verschiebbar gelagerte Hohlwelle 11 die zweite Position einnimmt.

Hierbei zeigt Fig. 1 beispielhaft die Hohlwelle 11 in der ersten Position, in der das Stirnrad 13 auf der Hohlwelle 11 mit dem Stirnrad 16 auf der Zwischenwelle 15 im Eingriff ist und der erste Antriebsgang eingenommen ist.

Im ersten Antriebsgang überträgt sich die antreibende Drehbewegung der antreibenden Antriebswelle 8 des Spindelmotors 7 derart, dass die aufgrund der Drehbewegung der antreibenden Antriebswelle 8 erzeugte Rotation des Stirnrads 9 über den Eingriff mit dem auf der Hohlwelle 11 sitzenden Stirnrad 12 eine Rotation des Stirnrads 12 und somit eine Rotation der Hohlwelle 11 um die Schaltgetriebeachse 10 bewirkt.

Das Stirnrad 14 befindet sich in der ersten Position der Hohlwelle 11 gemäß Fig. 1 mit keinem anderen Zahnrad in Eingriff und dreht genau wie das Stirnrad 17 frei und ohne Eingriff in ein jeweiliges Gegenrad, und das sich mit der Hohlwelle ebenfalls drehende Stirnrad 13, das in der ersten Position der Hohlwelle 11 gemäß Fig. 1 mit dem auf der Zwischenwelle 15 sitzenden Stirnrad 16 in Eingriff steht, überträgt die Rotation bzw. das Drehmoment der Hohlwelle 10 auf die Zwischenwelle 15.

Die Rotation bzw. das Drehmoment der Zwischenwelle 15 wird über das auf der Zwischenwelle sitzende Kegelrad 18 und das damit in Eingriff stehende, auf der Spindelantriebswelle 19 sitzende Kegelrad 20 auf die Spindelantriebswelle 19 übertragen und treibt die Spindel 6 an.

Im ersten Antriebsgang wird das Drehmoment des Spindelmotors 7 gemäß diesem Ausführungsbeispiel folglich über die Antriebswelle 8 mittels der Verschiebesatz-Getriebestufe der Stirnräder 9 und 12 auf die Hohlwelle 11, über die sich in der ersten Position befindenden Hohlwelle 11 mittels der in dem ersten Antriebsgang geschalteten Schaltgetriebestufe der ineinander eingreifenden Stirnräder 13 und 16 auf die Zwischenwelle 15 und schließlich über die Zwischenwelle 15 mittels der Winkelgetriebestufe der Kegelräder 18 und 20 auf die Spindelantriebsachse 19 übertragen.

Um in den zweiten Antriebsgang zu schalten, kann die Hohlwelle 11 auf der Schaltgetriebeachse 10 axial verschoben werden, insbesondere in dem Beispiel gemäß Fig. 1 hin zum Kopfträger 2, derart, dass der Eingriff der Stirnräder 13 und 16 gelöst wird und die Stirnräder 17 und 14 in Eingriff gebracht werden.

Nach Verschieben der Hohlwelle 11 in die zweite Position des zweiten Antriebsgangs stehen die Stirnräder 13 und 16 in Eingriff und die Stirnräder 13 und 16 drehen frei und ohne Eingriff in ein jeweiliges Gegenrad. Außerdem verbleiben die Stirnräder 9 und 12 des Verschiebesatzes auch in der zweiten Position der Hohlwelle 11 in Eingriff miteinander.

Im zweiten Antriebsgang überträgt sich die antreibende Drehbewegung der antreibenden Antriebswelle 8 des Spindelmotors 7 derart, dass die aufgrund der Drehbewegung der antreibenden Antriebswelle 8 erzeugte Rotation des Stirnrads 9 über den Eingriff mit dem auf der Hohlwelle 11 sitzenden Stirnrad 12 eine Rotation des Stirnrads 12 und somit eine Rotation der Hohlwelle 11 um die Schaltgetriebeachse 10 bewirkt.

Das Stirnrad 13 befindet sich in der zweiten Position der Hohlwelle 11 mit keinem anderen Zahnrad in Eingriff und dreht frei, und das sich mit der Hohlwelle 11 ebenfalls drehende Stirnrad 14, das in der zweiten Position der Hohlwelle 11 mit dem auf der Zwischenwelle 15 sitzenden Stirnrad 17 in Eingriff steht, überträgt die Rotation bzw. das Drehmoment der Hohlwelle 10 auf die Zwischenwelle 15.

Die Rotation bzw. das Drehmoment der Zwischenwelle 15 wird über das auf der Zwischenwelle sitzende Kegelrad 18 und das damit in Eingriff stehende, auf der Spindelantriebswelle 19 sitzende Kegelrad 20 auf die Spindelantriebswelle 19 übertragen und treibt die Spindel 6 an.

Im zweiten Antriebsgang wird das Drehmoment des Spindelmotors 7 gemäß dieses Ausführungsbeispiels folglich über die Antriebswelle 8 mittels der Verschiebesatz-Getriebestufe der Stirnräder 9 und 12 auf die Hohlwelle 11, über die sich in der zweiten Position befindenden Hohlwelle 11 mittels der in dem zweiten Antriebsgang geschalteten Schaltgetriebestufe der ineinander eingreifenden Stirnräder 14 und 17 auf die Zwischenwelle 15 und schließlich über die Zwischenwelle 15 mittels der Winkelgetriebestufe der Kegelräder 18 und 20 auf die Spindelantriebsachse 19 übertragen.

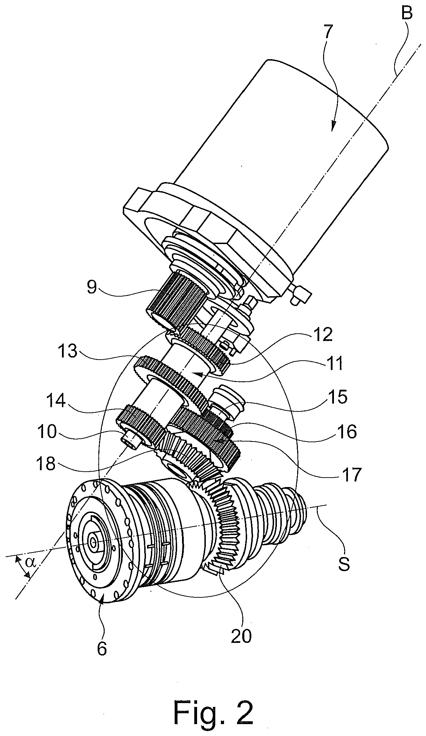

Fig. 2 zeigt beispielhaft eine Perspektivdarstellung eines Spindelantriebs einer Bearbeitungseinheit gemäß einem Ausführungsbeispiel der Erfindung. Insbesondere zeigt Fig. 2 beispielhaft eine konstruktive Ausgestaltung des Antriebs gemäß Fig. 1. Die Arbeitsspindel 6 ist horizontal ausgerichtet, wobei der Winkel zwischen der Spindelachse S der Arbeitsspindel 6 und der Drehachse B α = 45 Grad ist. Fig. 2 zeigt das Getriebe in der Stellung des ersten Antriebsgangs in dem die auf der Schaltgetriebeachse 10 axial verschiebbar gelagerte Hohlwelle 11 sich in der ersten Position befindet, bei der das auf der Hohlwelle 11 sitzende Stirnrad 13 mit dem auf der Zwischenwelle 15 sitzenden Stirnrad 16 in Eingriff ist, und die Stirnräder 14 und 17 jeweils frei drehen.

Analog zu Fig. 1 wird das Drehmoment des Spindelmotors 7 gemäß dieses Ausführungsbeispiels der Fig. 2 über die Antriebswelle des Spindelmotors 7 mittels der Verschiebesatz-Getriebestufe der Stirnräder 9 und 12 auf die Hohlwelle 11, über die sich in der ersten Position befindenden Hohlwelle 11 mittels der in dem ersten Antriebsgang geschalteten Schaltgetriebestufe der ineinander eingreifenden Stirnräder 13 und 16 auf die Zwischenwelle 15 und schließlich über die Zwischenwelle 15 mittels der Winkelgetriebestufe der Kegelräder 18 und 20 auf die Spindelantriebsachse der Spindel 6 übertragen.

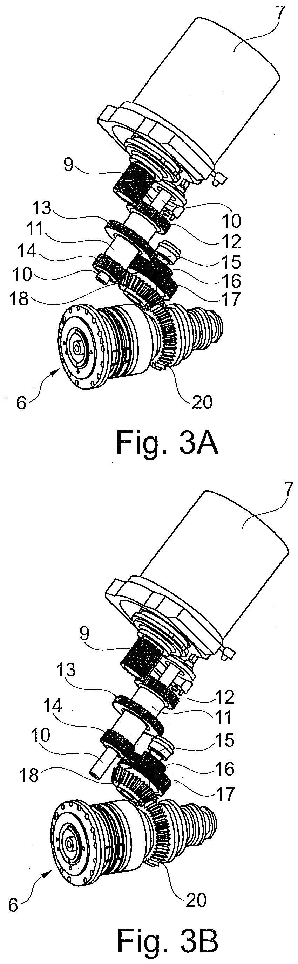

Fig. 3A zeigt beispielhaft eine Perspektivdarstellung des Spindelantriebs gemäß Fig. 2 in einem ersten Antriebsgang mit der Arbeitsspindel in horizontaler Stellung und Fig. 3B zeigt beispielhaft eine Perspektivdarstellung des Spindelantriebs gemäß Fig. 2 in einem zweiten Antriebsgang mit der Arbeitsspindel in horizontaler Stellung. Fig. 3A entspricht hierbei im Wesentlichen der Fig. 2 und Fig. 3A entspricht einer Stellung, in der die Hohlwelle 11 aus der ersten Position gemäß Fig. 2 bzw. Fig. 3A axial in Bezug auf die Schaltgetriebeachse 10 in die zweite Position verfahren bzw. verschoben wurde.

In Fig. 3B drehen die Stirnräder 13 und 16, die in der ersten Position gemäß Fig. 3A noch in Eingriff standen, in der zweiten Position der Hohlwelle 11 frei, und andererseits stehen die zuvor in Fig. 3A frei drehenden Stirnräder 14 und 17 in der zweiten Position der Hohlwelle gemäß Fig. 3B nun in Eingriff miteinander.

Hierbei wird in der Stellung gemäß Fig. 3B das Drehmoment des Spindelmotors 7 gemäß dieses über die Antriebswelle des Spindelmotors 7 mittels der Verschiebesatz-Getriebestufe der Stirnräder 9 und 12 auf die Hohlwelle 11, über die sich in der zweiten Position befindenden Hohlwelle 11 mittels der in dem zweiten Antriebsgang geschalteten Schaltgetriebestufe der ineinander eingreifenden Stirnräder 14 und 17 auf die Zwischenwelle 15 und schließlich über die Zwischenwelle 15 mittels der Winkelgetriebestufe der Kegelräder 18 und 20 auf die Spindelantriebsachse der Spindel 6 übertragen.

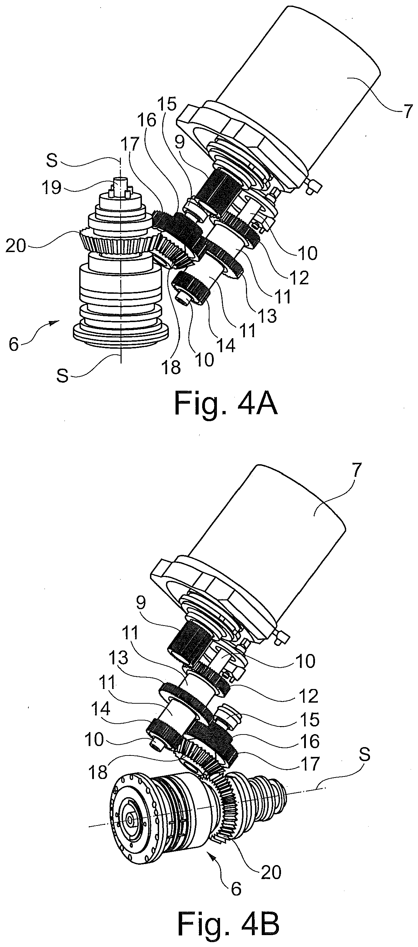

Fig. 4A zeigt beispielhaft eine Perspektivdarstellung des Spindelantriebs gemäß Fig. 2 mit der Arbeitsspindel in vertikaler Stellung und Fig. 4B zeigt beispielhaft eine Perspektivdarstellung des Spindelantriebs gemäß Fig. 2 mit der Arbeitsspindel in horizontaler Stellung. Fig. 4B entspricht hierbei im Wesentlichen der Stellung der Figs. 2 und 3A, d.h. beispielhaft ist der Antrieb in der in dem ersten Antriebsgang geschalteten Stellung gezeigt.

In Fig. 4A ist der Schwenkkopf 3 gegenüber der Stellung in Fig. 4B um 180 Grad um die Schwenkachse B verschwenkt, derart, dass die Spindelachse S der Arbeitsspindel 6 aus der horizontalen Stellung in die vertikale Stellung verschwenkt ist. Weiterhin wird in der Stellung gemäß Fig. 4A das Drehmoment des Spindelmotors 7 gemäß dieses über die Antriebswelle des Spindelmotors 7 mittels der Verschiebesatz-Getriebestufe der Stirnräder 9 und 12 auf die Hohlwelle 11, über die sich in der zweiten Position befindenden Hohlwelle 11 mittels der in dem zweiten Antriebsgang geschalteten Schaltgetriebestufe der ineinander eingreifenden Stirnräder 14 und 17 auf die Zwischenwelle 15 und schließlich über die Zwischenwelle 15 mittels der Winkelgetriebestufe der Kegelräder 18 und 20 auf die Spindelantriebsachse der Spindel 6 übertragen.

Da die Spindel 6 mit Spindelantriebswelle 19, die Zwischenwelle 15 sowie die Hohlwelle 11 auf der Schaltgetriebeachse 10 in dem Schwenkkopf 3 gelagert sind, rotieren diese Bauelemente bei Verschwenken des Schwenkkopfs 3 mit dem Schwenkkopf 3 mit und verändern ihre Position relative zueinander nicht. Das heißt insbesondere, dass die relativen Positionen der Spindel 6 mit Spindelantriebswelle 19, der Zwischenwelle 15 sowie der Hohlwelle 11 auf der Schaltgetriebeachse 10 und aller auf diesen sitzenden Zahnräder zueinander in den Figs. 4A und 4B identisch sind. Nur die relative Position der Antriebsachse 8 des Spindelmotors 7 und des auf der Antriebsachse 8 sitzenden Stirnrads 9 in Bezug auf die restlichen Elemente des Antriebsgetriebes verändert sich zwischen Fig. 4A und Fig. 4B, wenn die Antriebsachse 8 des Spindelmotors 7 und das auf der Antriebsachse 8 sitzende Stirnrad 9 um die Schwenkachse B um 180 Grad relativ zu und um die Hohlwelle 11 und das Stirnrad 12 herum rotieren.

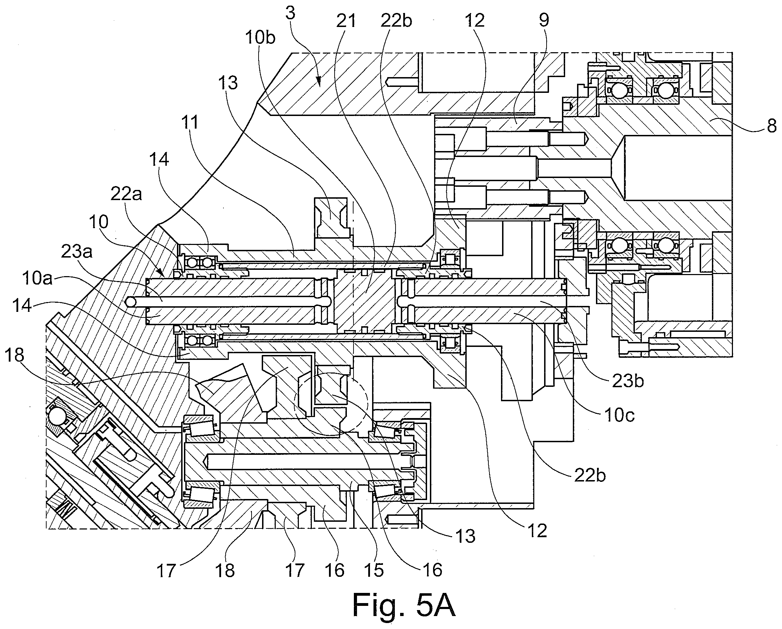

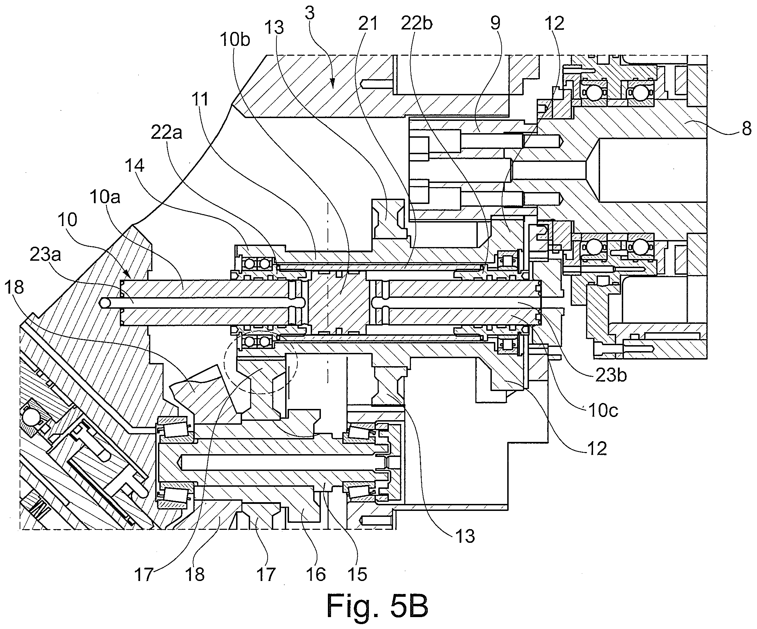

Fig. 5A zeigt beispielhaft eine Schnittdarstellung einer schaltbaren Getriebestufe gemäß einem Ausführungsbeispiel der Erfindung in einem ersten Antriebsgang und Fig. 5B zeigt beispielhaft eine Schnittdarstellung einer schaltbaren Getriebestufe gemäß einem Ausführungsbeispiel der Erfindung in einem zweiten Antriebsgang.

Insbesondere zeigen die Figs. 5A und 5B ein Detail der schaltbaren Baugruppe mit der Schaltgetriebeachse 10 und der Hohlwelle 11 in einer Schnittdarstellung. Weiterhin zeigen die Figs. 5A und 5B Details der Verschiebesatz-Getriebestufe (Stirnrad 9 auf der Antriebswelle 8 des Spindelmotors und Stirnrad 12 auf der Hohlwelle 11) und der schaltbaren Getriebestufe (Stirnräder 13 und 14 auf der Hohlwelle 11 und dazu entsprechende Stirnräder 16 und 17 auf der Zwischenwelle 15) sowie das Kegelrad 18 der Winkelgetriebestufe.

In Fig. 5A befindet sich die Hohlwelle 11 in der ersten Position, so dass der erste Antriebsgang geschaltet bzw. eingenommen ist. Dementsprechend befinden sich die Stirnräder 13 und 16 im Eingriff und die Stirnräder 14 und 17 drehen frei. In Fig. 5B befindet sich die Hohlwelle 11 in der zweiten Position, so dass der zweite Antriebsgang geschaltet bzw. eingenommen ist. Dementsprechend befinden sich die Stirnräder 14 und 17 im Eingriff und die Stirnräder 13 und 16 drehen frei.

Beispielhaft weist die Schaltgetriebeachse 10 einen ersten Achsabschnitt 10a, einen zweiten Achsabschnitt 10c und einen zwischen dem ersten Achsabschnitt 10a und dem zweiten Achsabschnitt 10c angeordneten Kolbenabschnitt 10b auf, wobei der Kolbenabschnitt 10b einen größeren Durchmesser aufweist als der erste Achsabschnitt 10a und der zweite Achsabschnitt 10c. Der Kolbenabschnitt 10c ist innerhalb eines Zylindermantels 21 der schaltbaren Getriebestufe verschiebbar gelagert, insbesondere dichtend verschiebbar.

Ein erster Dichtkopf 22a ist an einem ersten Ende des Zylindermantels 21 befestigt, z.B. verschraubt oder eingepresst, und der erste Dichtkopf 22a ist auf dem ersten Achsabschnitt 10a der Schaltgetriebeachse 10 verschiebbar dichtend gelagert, und ein zweiter Dichtkopf 22b ist an einem zweiten Ende des Zylindermantels 21 befestigt, z.B. verschraubt oder eingepresst, und der zweite Dichtkopf 22b ist auf dem zweiten Achsabschnitt 10c der Schaltgetriebeachse 10 verschiebbar dichtend gelagert. Somit kann die Baueinheit des Zylindermantels 21 und der Dichtköpfe 22a und 22b als Einheit auf der Schaltgetriebeachse 10 sitzend axial verschoben werden, wobei die Seitenflächen zwischen den Dichtköpfen 22a und 22b und den Achsabschnitten 10a und 10c abgedichtet sind bzw. die Seitenflächen zwischen dem Kolbenabschnitt 10b und dem Zylindermantel 21 abgedichtet sind.

Der erste Achsabschnitt 10a weist einen axial verlaufenden ersten Kanal 23a und erste kolbenseitige Kanalöffnungen 24a auf und der zweite Achsabschnitt 10c weist einen axial verlaufenden zweiten Kanal 23b und zweite kolbenseitige Kanalöffnungen 24b auf. Die ersten Kanalöffnungen 24a des ersten Achsabschnitts 10a verbinden den ersten Kanal 23a kolbenseitig mit einem Zwischenraum 25a zwischen dem Zylindermantel 21, dem Kolbenabschnitt 10b, dem ersten Achsabschnitt 10a und dem ersten Dichtkopf 22a, und die zweiten Kanalöffnungen 24b des zweiten Achsabschnitts 10c verbinden den zweiten Kanal 23b mit einem Zwischenraum 25b zwischen dem Zylindermantel 21, dem Kolbenabschnitt 10b, dem zweiten Achsabschnitt 10c und dem zweiten Dichtkopf 22b.

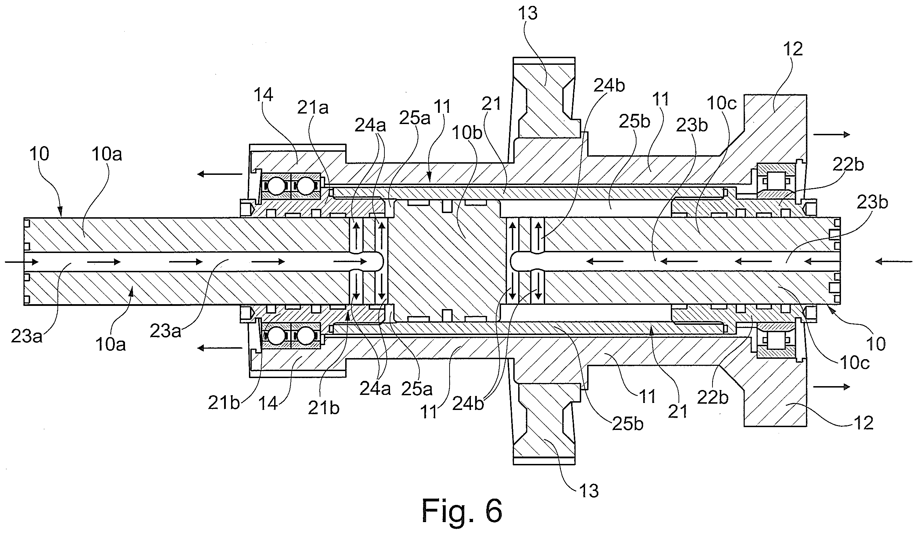

Fig. 6 zeigt beispielhaft eine Schnittdarstellung eines Details der schaltbaren Getriebestufe Figs. 5A und 5B, und zeigt in größerem Detail die Anordnung der Baugruppe umfassend den Zylindermantel 21, die Schaltgetriebeachse 10 mit dem Kolbenabschnitt 10b und den die Kanäle 23a und 23b und die Kanalöffnungen 24a und 24b aufweisenden Achsabschnitten 10a und 10c.

Die Hohlwelle 11 ist auf dem ersten Dichtkopf 22a und auf dem zweiten Dichtkopf 22b drehbar und ortsfest gelagert (beispielhaft mit zwei Kugellagerungen am ersten Dichtkopf 22a und einer Rollenlagerung am zweiten Dichtkopf 22b). Folglich ist die auf den Dichtköpfen sitzende Hohlwelle 11 um die Dichtköpfe 22a und 22b und um den Zylindermantel 21 drehbar gelagert und ist weiterhin zusammen mit den auf der Schaltgetriebeachse 10 sitzenden Dichtköpfen 22a und 22b und dem auf dem Kolbenabschnitt 10b der Schaltgetriebeachse 10 sitzenden Zylindermantel 21 als Einheit axial verschiebbar auf der Schaltgetriebeachse 10 gelagert. Die Dichtköpfe 22a und 22b dienen somit beispielhaft als pneumatische bzw. hydraulische Abdichtungselemente des Zylindermantels 21 sowie als Führung und Lagersitz für die Hohlwelle 11.

Die schaltbare Getriebestufe gemäß Figs. 5A, 5B und 6 ist dazu eingerichtet, durch hydraulisch und/oder pneumatisch erzeugte Druckdifferenzen zwischen dem ersten und dem zweiten Kanal 23a und 23b geschalten zu werden. Insbesondere befindet sich die schaltbare Getriebestufe in Fig. 5A in der ersten Position, in der für den ersten Antriebsgang die Stirnräder 13 und 16 ineinander eingreifen, wenn die Hohlwelle 11 in der ersten Position liegt. In Fig. 5B (und Fig. 6) befindet sich die schaltbare Getriebestufe in der zweiten Position, in der für den zweiten Antriebsgang die Stirnräder 14 und 17 ineinander eingreifen, wenn die Hohlwelle 11 in der zweiten Position liegt.

Um von der Stellung gemäß Fig. 5A (erste Position, erster Antriebsgang) in die Stellung gemäß Fig. 5B (zweite Position, zweiter Antriebsgang) geschaltet zu werden, kann pneumatischer und/oder hydraulischer Druck in den zweiten axialen Kanal 23b über eine dem Kolbenabschnitt 10b abgewandte Seite der Schaltgetriebeachse 10 eingebracht werden, der über die Kanalöffnungen 24b auf den Zwischenraum 25b einwirkt und aufgrund des aufgebrachten Drucks in Fig. 5B nach links verschoben wird, bis der Kolbenabschnitt 10b an dem ersten Dichtkopf 22b anschlägt und die Hohlwelle 11 die zweite Position gemäß Fig. 5B bzw. Fig. 6 eingenommen hat.

Um von der Stellung gemäß Fig. 5B (zweite Position, zweiter Antriebsgang) in die Stellung gemäß Fig. 5A (erste Position, erster Antriebsgang) geschaltet zu werden, kann pneumatischer und/oder hydraulischer Druck in den ersten axialen Kanal 23a über eine dem Kolbenabschnitt 10b abgewandte Seite der Schaltgetriebeachse 10 eingebracht werden, der über die Kanalöffnungen 24a auf den Zwischenraum 25a einwirkt und aufgrund des aufgebrachten Drucks in Fig. 5A nach rechts verschoben wird, bis der Kolbenabschnitt 10b an dem zweiten Dichtkopf 22a anschlägt und die Hohlwelle 11 die erste Position gemäß Fig. 5A eingenommen hat.

Nachdem im Vorstehenden hauptsächlich auf eine bevorzugte Ausgestaltung des Spindelantriebs und des Spindelantriebsgetriebes eingegangen wurde, soll im Folgenden auf eine beispielhafte und bevorzugte Ausgestaltung des Drehachsantriebs zum Verschwenken der Drehachse B beschrieben werden. Hierbei soll zudem auf die beispielhafte Ausgestaltung gemäß Fig. 1 verwiesen werden.

Wie in Fig. 1 gezeigt weist der Kopfträger 2 beispielhaft im Kopfträgergehäuse 4 eine Drehachsmotor 33 auf. Der Schwenkkopf 3 umfasst ein an dem Übergangsabschnitt zum Kopfträger 2 angeordnetes Schwenkachsen-Zahnrad 26, das koaxial mit der Schwenkachse B angeordnet ist. Eine drehbar gelagerte Welle 29 einer Getriebeeinheit des Kopfträgers 2 weist ein Zahnrad 27 auf, das mit dem Schwenkachsen-Zahnrad 26 in Eingriff steht. Über ein weiteres auf der Welle 29 sitzendes Zahnrad 28 wird die Welle 29 angetrieben und somit über den Eingriff des Zahnrads 27 mit dem Schwenkachsen-Zahnrad 26 des Schwenkkopfs 3 das Verschwenken des Schwenkkopfs 3 um die Drehachse B relativ zu dem Kopfträger 2 angetrieben. Zum Antreiben der Welle 29 steht das Zahnrad 29 mit einem auf einer Antriebswelle 32 des Drehachsmotors 33 sitzenden Zahnrad 31 in Verbindung, hier beispielsweise indirekt über einen Zahnriemen 30. Die Antriebswelle 32 des Drehachsmotors 33 und die Welle 29 sind beispielhaft parallel zueinander und parallel zu der Schwenkachse B bzw. parallel zu der Antriebsachse (Antriebswelle 8) des Spindelmotors 7 ausgerichtet.

Wie in Fig. 1 gezeigt ergibt sich eine vorteilhafte beispielhafte Ausgestaltung, wenn der Drehachsmotor 33 auf der der Schwenkachse B abgewandten Seite der Getriebeeinheit mit der Welle 29 und den Zahnrädern 27 und 28 angeordnet ist, da er dann von der unteren Seite gut zugänglich ist, wenn Bedarf an Wartung oder Pflege besteht.

Außerdem ergibt sich im Innenraum des Kopfträgergehäuses Platz für einen Zwischenraum in der Nähe der Schwenkachse B, in dem nahe der Schwenkachse B Zuführungsleitungen zum Schwenkkopf 2 wie z.B. Energiezuführungen, Pneumatikzuführungen und/oder Hydraulikzuführungen sowie ggf. Zuführungen für Kühlflüssigkeit. Hierfür kann beispielhaft im Inneren des Kopfträgergehäuses 4 ein zum Schwenkkörper 3 verlaufendes, bevorzugt flexibles Zuführungsrohr 34 geführt sein.

Vorzugsweise sind hierbei gemäß Fig. 1 der Drehachsmotor 33 und der Spindelmotor 7 relativ zueinander auf gegenüberliegenden Seiten der Schwenkachse B angeordnet, so dass im Mittelraum des Kopfträgergehäuses 4 ausreichend Platz für das Zuführungsrohr 34 bereitgestellt werden kann und das Zuführungsrohr 34 nahe der Drehachse B zum Schwenkkopf 3 geführt sein kann.

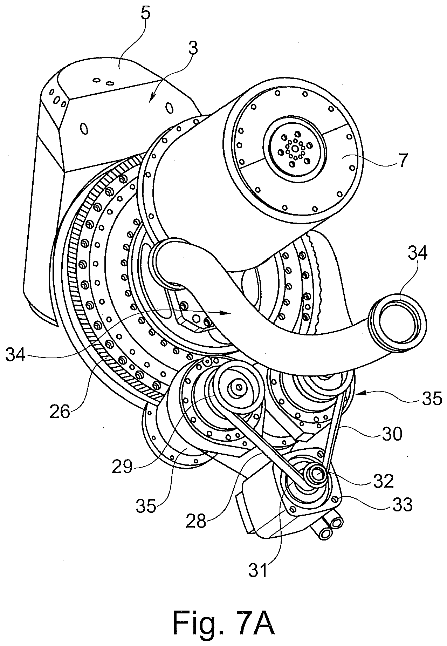

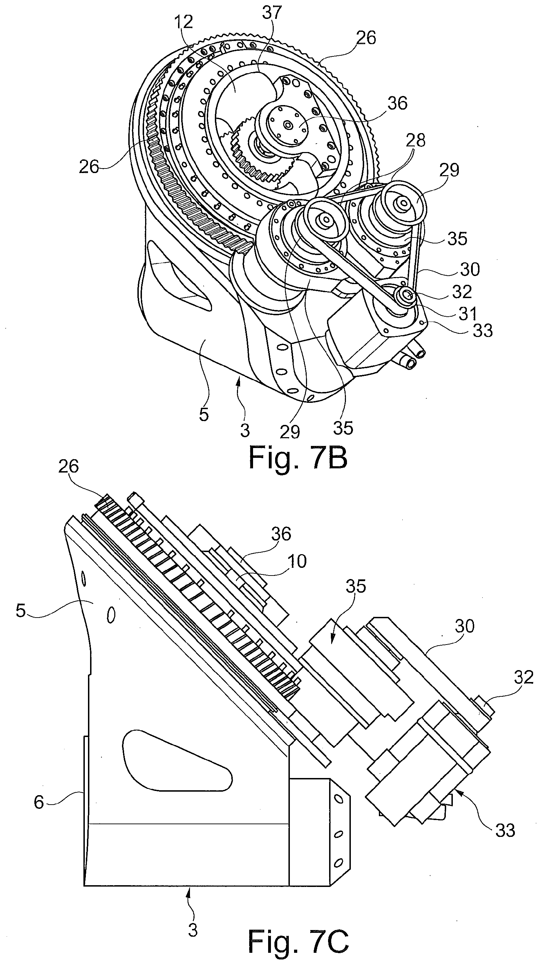

Fig. 7A zeigt beispielhaft eine Perspektivdarstellung einer Anordnung der Antriebsmotoren eines Kopfträgers gemäß einem weiteren Ausführungsbeispiel der Erfindung, Fig. 7B zeigt beispielhaft eine Perspektivdarstellung eines Drehachsantriebs eines Kopfträgers gemäß einem Ausführungsbeispiel der Erfindung (entsprechend Fig. 7A ohne Spindelmotor 7 und ohne Zuführungsleitung 34), und Fig. 7C zeigt beispielhaft eine Seitenansicht des Drehachsantriebs gemäß Fig. 7B.

An der Stirnseite des Schwenkkopfes 3, mit der der Schwenkkopf 3 drehbar an dem Kopfträger gehalten werden kann, weist der Schwenkkopf 3 das Schwenkachsen-Zahnrad 26 analog zu Fig. 1 auf. Der Kopfträger weist in diesem Ausführungsbeispiel beispielhaft zwei mit dem Schwenkachsen-Zahnrad 26 in Eingriff stehende Getriebeeinheiten 35 zum Übertragen der Drehbewegung der Antriebswelle 32 des Drehachsmotors 33 auf das Schwenkachsen-Zahnrad 26 auf, wobei die beiden Getriebeeinheiten 35 über den gemeinsamen Zahnriemen 30 angetrieben werden. Die Getriebeeinheiten können in Ausführungsbeispielen der Erfindung z.B. als gegeneinander verspannte Planetengetriebe ausgestaltet sein, insbesondere z.B. mit einen das Planetengetriebe umschließenden Kühlmantel.

Zwischen den Getriebeeinheiten 35 und dem Spindelmotor 7 verläuft die Zuführungsleitung bzw. das Zuführungsrohr 34 zu dem Schwenkkopf 3. Auf der der Drehachse B bzw. dem Spindelmotor 7 abgewandten Seite der Getriebeeinheiten 35 ist der Drehachsmotor 33 angeordnet.

Jede der beiden Getriebeeinheiten 35 weist eine jeweilige Hauptachse (Welle) 29 auf, die parallel zu der Antriebswelle 32 des Drehachsmotors 33 angeordnet ist, wobei die beiden Hauptachsen 29 der Getriebeeinheiten 35 und die Antriebswelle 32 des Drehachsmotors 33 im Wesentlichen gleichbeabstandet zueinander angeordnet sind, derart, dass der Zahnriemen 30, der mit Zahnrädern 28 der beiden Getriebeeinheiten 35 und einem auf der Antriebswelle 32 des Drehachsmotors 33 sitzendes Zahnrad 31 im Eingriff ist, im Wesentlichen eine einem gleichseitigen Dreieck entsprechende Form annimmt (siehe insbesondere Fig. 7B).

Der Drehachsmotor 33 ist auf der der Schwenkachse B abgewandten Seite der beiden Getriebeeinheiten 35 angeordnet und ist von unten für Wartung und Pflege leicht zugänglich angeordnet. Der Drehachsmotor 33 und der Spindelmotor 7 sind relativ zueinander auf gegenüberliegenden Seiten der Schwenkachse B angeordnet.

Die Antriebswelle 32 des Drehachsmotors 33 ist parallel zu der Schwenkachse B bzw. zur Achse (Antriebswelle 8) des Spindelmotors 7 angeordnet, und die Antriebswelle 32 des Drehachsmotors 33 und die Antriebswelle 8 des Spindelmotors 7 spannen mit der Schwenkachse B eine gemeinsame Ebene auf, wobei die Schwenkachse B zwischen den beiden Antriebswellen 8 und 32 angeordnet ist (siehe insbesondere Fig. 7C, Antriebswelle 8 nicht gezeigt).

In Fig. 7B sind weiterhin ein an dem Schwenkkopf 3 angebrachtes Lagerungselement 36 und eine halbkreisförmige Öffnung 37 gezeigt. Das Lagerungselement 36 kann hierbei dazu dienen, ein kopfträgerseitiges Ende der Schaltgetriebeachse 10 endseitig zu halten bzw. drehfest zu lagern. Die Öffnung 37 erlaubt es der beispielhaft fliegend gelagerten Antriebswelle 8 des Spindelmotors 7 mit dem Stirnrad 9 in den Schwenkkopf 3 hineinzuragen, um das Stirnrad 9 mit dem Stirnrad 12 in Eingriff zu bringen.

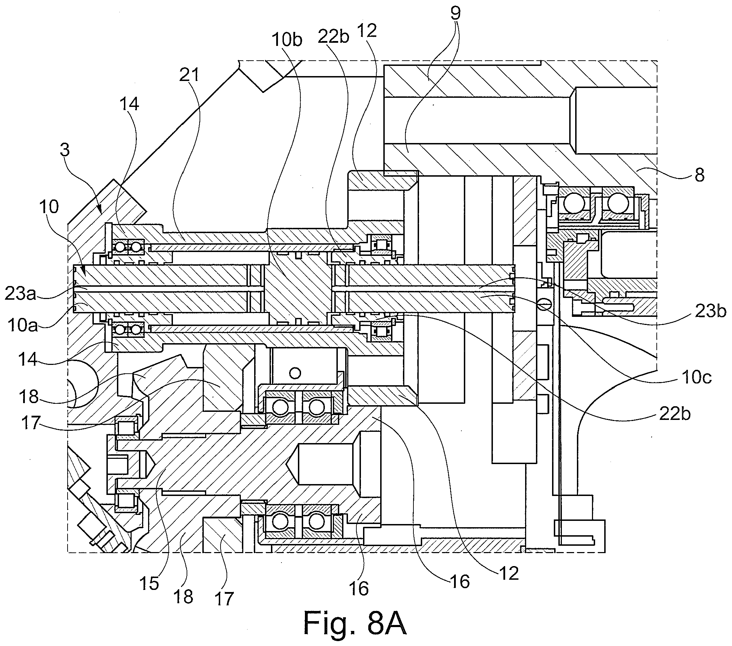

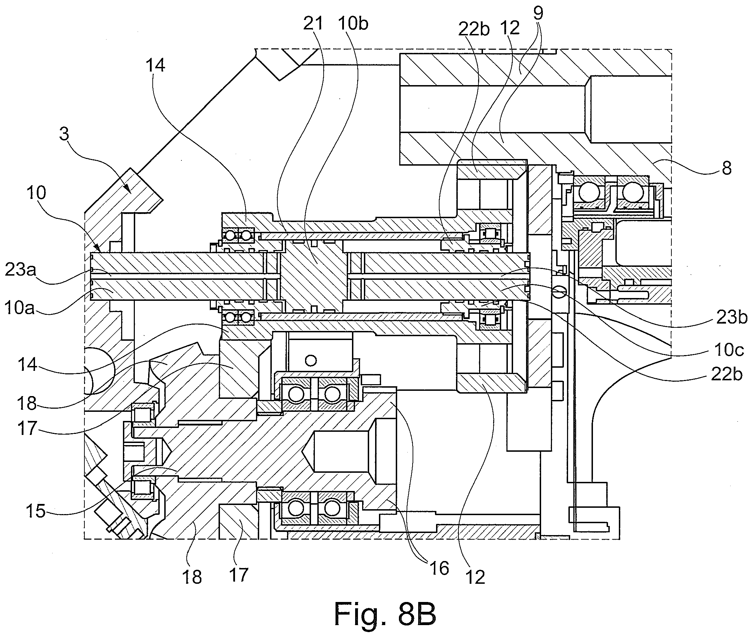

Fig. 8A zeigt beispielhaft eine Schnittdarstellung einer schaltbaren Getriebestufe gemäß einem weiteren Ausführungsbeispiel der Erfindung in einem ersten Antriebsgang und Fig. 8B zeigt beispielhaft eine Schnittdarstellung einer schaltbaren Getriebestufe gemäß dem weiteren Ausführungsbeispiel der Erfindung in einem zweiten Antriebsgang.

Im Unterschied zu dem Ausführungsbeispiel gemäß Figs. 5A und 5B sind in dem Ausführungsbeispiel gemäß Figs. 8A und 8B statt drei Stirnrädern beispielhaft nur zwei Strinräder 12 und 14 auf der Hohlwelle 11 angeordnet, wobei das Stirnrad 12 in der ersten Getriebestufe bzw. wenn die erste Getriebestufe geschaltet ist, auf einer Seite mit dem Stirnrad 9 der Antriebswelle 8 kämmt und auf der anderen Seite mit dem Stirnrad 16 auf der Zwischenwelle 15 kämmt.

Insbesondere zeigen die Figs. 8A und 8B ein Detail der schaltbaren Baugruppe mit der Schaltgetriebeachse 10 und der Hohlwelle 11 in einer Schnittdarstellung. Weiterhin zeigen die Figs. 8A und 8B Details der Verschiebesatz-Getriebestufe (Stirnrad 9 auf der Antriebswelle 8 des Spindelmotors und Stirnrad 12 auf der Hohlwelle 11) und der schaltbaren Getriebestufe (Stirnräder 12 und 14 auf der Hohlwelle 11 und dazu entsprechende Stirnräder 16 und 17 auf der Zwischenwelle 15) sowie das Kegelrad 18 der Winkelgetriebestufe.

In Fig. 8A befindet sich die Hohlwelle 11 in der ersten Position, so dass der erste Antriebsgang geschaltet bzw. eingenommen ist. Dementsprechend befinden sich die Stirnräder 12 und 16 im Eingriff und die Stirnräder 14 und 17 drehen frei. In Fig. 8B befindet sich die Hohlwelle 11 in der zweiten Position, so dass der zweite Antriebsgang geschaltet bzw. eingenommen ist. Dementsprechend befinden sich die Stirnräder 14 und 17 im Eingriff und das Stirnrad 16 dreht frei, wobei das Stirnrad 12 in beiden Getriebestufen jeweils mit dem Stirnrad 9 im Eingriff ist, jedoch an zueinander verschobenen Positionen (Schiebesitz).

## Patentansprüche

1. Bearbeitungseinheit für eine Werkzeugmaschine, mit:
- einem an der Werkzeugmaschine (1) anbringbaren Kopfträger (2),
- einem an dem Kopfträger (2) um eine Schwenkachse (B) schwenkbar gehaltenen Schwenkkopf (3),
- einer an dem Schwenkkopf (3) angeordnete Arbeitsspindel (6) mit einer relativ zu der Schwenkachse (B) geneigten Spindelachse (S),
- einem in dem Kopfträger (2) angeordneten Spindelmotor (7), der eine parallel zu der Schwenkachse (B) angeordnete Antriebswelle (8) aufweist, und
- einem Antriebsgetriebe zum Übertragen der Drehbewegung der Antriebswelle (8) des Spindelmotors (7) auf eine Antriebswelle (19) der Arbeitsspindel (6),
wobei das Antriebsgetriebe eine schaltbare Getriebestufe aufweist,
**dadurch gekennzeichnet, dass**
der Schwenkkopf (3) eine Schaltgetriebeachse (10) aufweist, die koaxial mit der Schwenkachse (B) des Schwenkkopfs (3) ausgerichtet ist, wobei die schaltbare Getriebestufe eine auf der Schaltgetriebeachse (10) des Schwenkkopfs (3) verschiebbar gelagerte Hohlwelle (11) aufweist.

2. Bearbeitungseinheit gemäß Anspruch 1, **dadurch gekennzeichnet, dass**
die schaltbare Getriebestufe dazu eingerichtet ist, das Antriebsgetriebe zwischen einem ersten Antriebsgang und einem zweiten Antriebsgang zu schalten, indem die verschiebbar gelagerte Hohlwelle (11) auf der Schaltgetriebeachse (10) parallel zur Schwenkachse (B) zwischen einer ersten Position und einer zweiten Position verschoben wird.

3. Bearbeitungseinheit gemäß Anspruch 2, **dadurch gekennzeichnet, dass**
der erste Antriebsgang eingenommen ist, wenn die verschiebbar gelagerte Hohlwelle (11) die erste Position einnimmt, und der zweite Antriebsgang eingenommen ist, wenn die verschiebbar gelagerte Hohlwelle (11) die zweite Position einnimmt.

4. Bearbeitungseinheit gemäß Anspruch 2 oder 3, **dadurch gekennzeichnet, dass**
die Schaltgetriebeachse (10) einen ersten Achsabschnitt (10a), einen zweiten Achsabschnitt (10c) und einen zwischen dem ersten Achsabschnitt (10a) und dem zweiten Achsabschnitt (10c) angeordneten Kolbenabschnitt (10b) aufweist,
wobei der Kolbenabschnitt (10b) einen größeren Durchmesser aufweist als der erste Achsabschnitt (10a) und der zweite Achsabschnitt (10c), und
wobei die schaltbare Getriebestufe einen in der Hohlwelle (11) angeordneten Zylindermantel (21) aufweist, in dem der Kolbenabschnitt (10b) verschiebbar dichtend gelagert ist.

5. Bearbeitungseinheit gemäß Anspruch 4, **dadurch gekennzeichnet, dass**
ein erster Dichtkopf (22a) an einem ersten Ende des Zylindermantels (21) befestigt ist und auf dem ersten Achsabschnitt (10a) der Schaltgetriebeachse (10) verschiebbar dichtend gelagert ist, und
ein zweiter Dichtkopf (22b) an einem zweiten Ende des Zylindermantels (21) befestigt ist und auf dem zweiten Achsabschnitt (10c) der Schaltgetriebeachse (10) verschiebbar dichtend gelagert ist,
wobei die Hohlwelle (11) auf dem ersten Dichtkopf (22a) und auf dem zweiten Dichtkopf (22b) drehbar gelagert ist.

6. Bearbeitungseinheit gemäß Anspruch 5, **dadurch gekennzeichnet, dass**
der erste Achsabschnitt (10a) einen axial verlaufenden ersten Kanal (23a) aufweist und der zweite Achsabschnitt (10c) einen axial verlaufenden zweiten Kanal (23b) aufweist,
wobei erste Kanalöffnungen (24a) des ersten Achsabschnitts (10a) den ersten Kanal (23a) mit einem Zwischenraum (25a) zwischen dem Zylindermantel (21), dem Kolbenabschnitt (10b), dem ersten Achsabschnitt (10a) und dem ersten Dichtkopf (22a) verbinden, und zweite Kanalöffnungen (24b) des zweiten Achsabschnitts (10c) den zweiten Kanal (23b) mit einem Zwischenraum (25b) zwischen dem Zylindermantel (21), dem Kolbenabschnitt (10b), dem zweiten Achsabschnitt (10c) und dem zweiten Dichtkopf (22b) verbinden.

7. Bearbeitungseinheit gemäß Anspruch 6, **dadurch gekennzeichnet, dass**
die schaltbare Getriebestufe dazu eingerichtet ist, durch hydraulisch und/oder pneumatisch erzeugte Druckdifferenzen zwischen dem ersten und dem zweiten Kanal (23a, 23b) geschalten zu werden.

8. Bearbeitungseinheit gemäß einem der vorstehenden Ansprüche, **dadurch gekennzeichnet, dass**
das Antriebsgetriebe eine Schieberadsatz-Getriebestufe mit einem zwei Stirnräder (9, 12) umfassenden Schieberadsatz aufweist, wobei ein erstes Stirnrad (9) des Schieberadsatzes drehfest auf der Antriebswelle (8) des Spindelmotors (7) angeordnet ist und ein in das erste Stirnrad (9) eingreifendes zweites Stirnrad (12) des Schieberadsatzes drehfest auf der verschiebbar gelagerten Hohlwelle (11) angeordnet ist.

9. Bearbeitungseinheit gemäß einem der vorstehenden Ansprüche, **dadurch gekennzeichnet, dass**
die schaltbare Getriebestufe ein erstes Stirnradpaar (13, 16; 12,16) für einen ersten Getriebegang und ein zweites Stirnradpaar (14, 17) für einen zweiten Getriebegang aufweist.

10. Bearbeitungseinheit gemäß Anspruch 9, **dadurch gekennzeichnet, dass**
das erste Stirnradpaar ein drittes Stirnrad (13) umfasst, das drehfest auf der verschiebbar gelagerten Hohlwelle (11) angeordnet ist, und das zweite Stirnradpaar ein viertes Stirnrad (14) umfasst, das drehfest auf der verschiebbar gelagerten Hohlwelle (11) angeordnet ist; oder
das erste Stirnradpaar das zweite Stirnrad (12) umfasst, und das zweite Stirnradpaar ein viertes Stirnrad (14) umfasst, das drehfest auf der verschiebbar gelagerten Hohlwelle (11) angeordnet ist.

11. Bearbeitungseinheit gemäß einem der vorstehenden Ansprüche, **dadurch gekennzeichnet, dass**
der Schwenkkopf (3) eine Zwischenwelle (15) aufweist, die parallel mit der Schwenkachse (B) des Schwenkkopfs ausgerichtet ist,
wobei
das Antriebsgetriebe eine Kegelrad-Getriebestufe aufweist, wobei ein erstes Kegelrad (18) der Kegelrad-Getriebestufe drehfest auf der Zwischenwelle (15) angeordnet ist, und
ein zweites Kegelrad (20) der Kegelrad-Getriebestufe zum Antreiben der Arbeitsspindel (6) drehfest auf der Antriebswelle (19) der Arbeitsspindel (6) angeordnet ist.

12. Bearbeitungseinheit gemäß einem der vorstehenden Ansprüche, **dadurch gekennzeichnet, dass**
der Schwenkkopf (3) ein Schwenkachsen-Zahnrad (26) aufweist, das koaxial mit der Schwenkachse (B) angeordnet ist, und
die Bearbeitungseinheit einen an dem Kopfträger (2) angeordneten Drehachsmotor (33) und eine oder mehrere mit dem Schwenkachsen-Zahnrad (26) in Eingriff stehende Getriebeeinheiten (35) zum Übertragen der Drehbewegung einer Antriebswelle (32) des Drehachsmotors (33) auf das Schwenkachsen-Zahnrad (26) aufweist, wobei die eine oder mehreren Getriebeeinheiten (35) über einen gemeinsamen Zahnriemen (30) angetrieben werden, der sich mit einem Zahnrad (31) auf der Antriebswelle (32) des Drehachsmotors (33) in Eingriff befindet.

13. Bearbeitungseinheit gemäß Anspruch 12, **dadurch gekennzeichnet, dass**
die Bearbeitungseinheit zwei mit dem Schwenkachsen-Zahnrad (26) in Eingriff stehende Getriebeeinheiten (35) zum Übertragen der Drehbewegung der Antriebswelle (32) des Drehachsmotors (33) auf das Schwenkachsen-Zahnrad (26) aufweist, wobei die beiden Getriebeeinheiten (35) über den gemeinsamen Zahnriemen (30) angetrieben werden,
wobei jede der beiden Getriebeeinheiten (35) eine jeweilige Hauptachse (29) aufweist, die parallel zu der Antriebswelle (32) des Drehachsmotors (33) angeordnet ist, wobei die beiden Hauptachsen (29) und die Antriebswelle (32) des Drehachsmotors (33) im Wesentlichen gleichbeabstandet zueinander angeordnet sind, derart, dass der Zahnriemen (30) im Wesentlichen eine einem gleichseitigen Dreieck entsprechende Form annimmt.

14. Bearbeitungseinheit gemäß Anspruch 12 oder 13, **dadurch gekennzeichnet, dass**
der Drehachsmotor (33) auf der der Schwenkachse (B) abgewandten Seite der einen oder mehreren Getriebeeinheiten (35) angeordnet ist,
der Drehachsmotor (33) und der Spindelmotor (7) relativ zueinander auf gegenüberliegenden Seiten der Schwenkachse (B) angeordnet sind,
die Antriebswelle (32) des Drehachsmotors (33) parallel zu der Schwenkachse (B) angeordnet ist, und
die Antriebswelle (32) des Drehachsmotors (33) und die Antriebswelle (8) des Spindelmotors (7) mit der Schwenkachse (B) eine gemeinsame Ebene aufspannen und die Schwenkachse (B) zwischen den beiden Antriebswellen (8, 32) angeordnet ist.

15. Werkzeugmaschine mit einer Bearbeitungseinheit gemäß einem der vorstehenden Ansprüche, wobei die Bearbeitungseinheit in zumindest einer Koordinatenachse verfahrbar an der Werkzeugmaschine angebracht ist.

## Claims

1. A machining unit for a machine tool, comprising:
- a head carrier (2), which can be attached to said machine tool (1),
- a pivot head (3) held on said head carrier (2) in such a way that said pivot head is pivotable about a pivot axis (B),
- a working spindle (6), which is arranged on said pivot head (3) and has a spindle axis (S) that is inclined relative to said pivot axis (B),
- a spindle motor (7), which is arranged in the head carrier (2) and has a drive shaft (8) arranged in parallel to said pivot axis (B), and
- a drive transmission for transmitting the rotational motion of said drive shaft (8) of said spindle motor (7) to a drive shaft (19) of said working spindle (6),
wherein said drive transmission has a shiftable transmission stage, **characterized in that**
said pivot head (3) has a shifting transmission shaft (10) oriented coaxially to said pivot axis (B) of said pivot head (3), wherein said shiftable transmission stage has a hollow shaft (11) movably supported on said shifting transmission shaft (10) of said pivot head (3).

2. The machining unit according to claim 1, **characterized in that**
said shiftable transmission stage is configured to shift said drive gear between a first drive gear and a second drive gear by displacing said movably supported hollow shaft (11) on said shifting transmission shaft (10) in parallel to said pivot axis (B) between a first position and a second position.

3. The machining unit according to claim 2, **characterized in that**
said first drive gear is engaged when said movably mounted hollow shaft (11) occupies said first position, and said second drive gear is engaged when said movably mounted hollow shaft (11) occupies said second position.

4. The machining unit according to claim 2 or 3, **characterized in that**
said shifting transmission shaft (10) has a first shaft portion (10a), a second shaft portion (10c), and a piston portion (10b) arranged between said first shaft portion (10a) and said second shaft portion (10c),
wherein said piston portion (10b) has a larger diameter than said first shaft portion (10a) and said second shaft portion (10c), and
wherein said shiftable transmission stage comprises a cylinder jacket (21) which is arranged in said hollow shaft (11) and in which said piston portion (10b) is movably supported in a sealing manner.

5. The machining unit according to claim 4, **characterized in that**
a first sealing head (22a) is attached to a first end of said cylinder jacket (21) and is movably supported on said first shaft portion (10a) of said shifting transmission shaft (10) in a sealing manner, and
a second sealing head (22b) is attached to a second end of said cylinder jacket (21) and is movably supported on said second shaft portion (10c) of said shifting transmission shaft (10) in a sealing manner,
wherein said hollow shaft (11) is rotatably supported on said first sealing head (22a) and on said second sealing head (22b).

6. The machining unit according to claim 5, **characterized in that**
said first shaft portion (10a) has an axially extending first channel (23a) and said second shaft portion (10c) has an axially extending second channel (23b),
wherein first channel openings (24a) of said first shaft portion (10a) connect said first channel (23a) with a clearance (25a) between said cylinder jacket (21), said piston section (10b), said first shaft portion (10a), and said first sealing head (22a), and second channel openings (24b) of said second shaft portion (10c) connect said second channel (23b) with a clearance (25b) between said cylinder jacket (21), said piston section (10b), said second shaft section (10c) and said second sealing head (22b).

7. The machining unit according to claim 6, **characterized in that**
said shiftable transmission stage is configured to be shifted between said first and second channels (23a, 23b) by means of hydraulically and/or pneumatically generated pressure differences.

8. The machining unit according to one of the preceding claims, **characterized in that**
said drive transmission comprises a sliding gear set transmission stage with a sliding gear set comprising two cylindrical gears (9, 12), wherein a first cylindrical gear (9) of said sliding gear set is non-rotatably arranged on said drive shaft (8) of said spindle motor (7) and a second cylindrical gear (12) of said sliding gear set engaging said first cylindrical gear (9) is non-rotatably arranged on said movably supported hollow shaft (11).

9. The machining unit according to one of the preceding claims, **characterized in that**
said shiftable transmission stage comprises a first pair of cylindrical gears (13, 16; 12, 16) for a first transmission gear and a pair of cylindrical gears (14, 17) for a second transmission gear.

10. The machining unit according to claim 9, **characterized in that**
said first pair of cylindrical gears comprises a third cylindrical gear (13) non-rotatably arranged on said movably supported hollow shaft (11) and said second pair of cylindrical gears comprises a fourth cylindrical gear (14) non-rotatably arranged on said movably supported hollow shaft (11); or
said first pair of cylindrical gears comprises said second cylindrical gear (12) and said second pair of cylindrical gears comprises a fourth cylindrical gear (14) non-rotatably supported on said movably supported hollow shaft (11).

11. The machining unit according to one of the preceding claims, **characterized in that**
said pivot head (3) comprises an intermediate shaft (15) oriented in parallel to said pivot axis (b) of said pivot head,
wherein
said drive transmission comprises a bevel gear transmission stage, and
wherein a first bevel gear (18) of said bevel gear transmission stage is non-rotatably arranged on said intermediate shaft (15), and
a second bevel gear (20) of said bevel gear transmission stage for driving said working spindle (6) is non-rotatably arranged on said drive shaft (18) of said working spindle (6).

12. The machining unit according to one of the preceding claims, **characterized in that**
said pivot head (3) comprises a pivot axis gear (26) arranged coaxially to said pivot axis (B), and
said machining unit further comprises a rotational axis motor (33) arranged on said head carrier (2) and one or more transmission units (35) engaged with said pivot axis gear (26) for transmitting a rotational motion of a drive shaft (32) of said rotational axis motor (33) to said pivot axis gear (26), wherein said one or more transmission units (35) are driven by a common toothed belt (30) engaged with a gear (31) on said drive shaft (32) of said rotational axis motor (33).

13. The machining unit according to claim 12, **characterized in that**
said machining unit comprises two transmission units (35) engaged with said pivot axis gear (26) for transmitting the rotational motion of said drive shaft (32) of said rotational axis motor (33) to said pivot axis gear (26), wherein said two transmission units (35) are driven by means of said common toothed belt (30), and
wherein each of said two transmission units (35) comprises a respective main axis (29) arranged in parallel to said drive shaft (32) of said rotational axis motor (33), wherein said two main axes (29) and said drive shaft (32) of said rotational axis motor (33) are spaced substantially equally from each other such that said toothed belt (30) takes a form substantially corresponding to an equilateral triangle.

14. The machining unit according to claim 12 or 13, **characterized in that**
said rotational axis motor (33) is arranged on the side of said one or more transmission units (35) facing away from said pivot axis (B),
said rotational axis motor (33) and said spindle motor (7) are arranged on opposite sides of said pivot axis with respect to each other,
said drive shaft of said rotational axis motor (33) is arranged in parallel to said pivot axis (B), and
said drive shaft (32) of said rotational axis motor (33) and said drive shaft (8) of said spindle motor (7) span a common plane with said pivot axis (B), and said pivot axis (B) is arranged between said two drive shafts (8, 32).

15. A machine tool comprising a machining unit according to one of the preceding claims, wherein said machining unit is attached to said machine tool such that it is displaceable in at least one coordinate axis.

## Revendications

1. Unité d'usinage pour une machine-outil, comportant :
- un porte-tête (2) susceptible d'être monté sur la machine-outil (1),
- une tête pivotante (3) maintenue mobile en pivotement autour d'un axe de pivotement (B) sur le porte-tête (2),
- une broche de travail (6) agencée sur la tête pivotante (3) et ayant un axe de broche (S) incliné par rapport à l'axe de pivotement (B),
- un moteur de broche (7) agencé dans le porte-tête (2) et présentant un arbre d'entraînement (8) agencé parallèlement à l'axe de pivotement (B), et
- un mécanisme d'entraînement pour transmettre le mouvement de rotation de l'arbre d'entraînement (8) du moteur de broche (7) à un arbre d'entraînement (19) de la broche de travail (6),
le mécanisme d'entraînement comprenant un étage d'engrenage commutable,
**caractérisée en ce que**
la tête pivotante (3) présente un axe de transmission commutable (10) qui est orienté coaxialement à l'axe de pivotement (B) de la tête pivotante (3), l'étage d'engrenage commutable présentant un arbre creux (11) monté mobile en translation sur l'axe de transmission commutable (10) de la tête pivotante (3).

2. Unité d'usinage selon la revendication 1,
**caractérisée en ce que**
l'étage d'engrenage commutable est conçu pour commuter le mécanisme d'entraînement entre un premier rapport d'entraînement et un second rapport d'entraînement par déplacement de l'arbre creux (11) monté mobile en translation sur l'axe de transmission commutable (10) parallèlement à l'axe de pivotement (B) entre une première position et une seconde position.

3. Unité d'usinage selon la revendication 2,
**caractérisée en ce que**
le premier rapport d'entraînement est engagé lorsque l'arbre creux (11) monté mobile en translation occupe la première position, et le second rapport d'entraînement est engagé lorsque l'arbre creux (11) monté mobile en translation occupe la seconde position.

4. Unité d'usinage selon la revendication 2 ou 3,
**caractérisée en ce que**
l'axe de transmission commutable (10) comprend une premier portion d'axe (10a), une seconde portion d'axe (10c) et une portion formant piston (10b) agencée entre la première portion d'axe (10a) et la seconde portion d'axe (10c),
la portion formant piston (10b) présentant un diamètre supérieur à celui de la première portion d'axe (10a) et de la seconde portion d'axe (10c), et l'étage d'engrenage commutable comprend une enveloppe de cylindre (21) agencée dans l'arbre creux (11), dans laquelle la portion formant piston (10b) est montée mobile en translation avec étanchement.

5. Unité d'usinage selon la revendication 4,
**caractérisée en ce que**
une première tête d'étanchement (22a) est fixée à une première extrémité de l'enveloppe de cylindre (21) et est montée mobile en translation avec étanchement sur la première portion d'axe (10a) de l'axe de transmission commutable (10),
une seconde tête d'étanchement (22b) est fixée à une seconde extrémité de l'enveloppe de cylindre (21) et est montée mobile en translation avec étanchement sur la seconde portion d'axe (10c) de l'axe de transmission commutable (10),
l'arbre creux (11) étant monté mobile en rotation sur la première tête d'étanchement (22a) et sur la seconde tête d'étanchement (22b).

6. Unité d'usinage selon la revendication 5,
**caractérisée en ce que**
la première portion d'axe (10a) présente un premier canal axial (23a) et la seconde portion d'axe (10c) présente un second canal axial (23b),
des premières ouvertures de canal (24a) de la première portion d'axe (10a) relient le premier canal (23a) à un intervalle (25a) entre l'enveloppe de cylindre (21), la portion formant piston (10b), la seconde portion d'axe (10a) et la première tête d'étanchement (22a), et des secondes ouvertures de canal (24b) de la seconde portion d'axe (10c) relient le second canal (23b) à un intervalle (25b) entre l'enveloppe de cylindre (21), la portion formant piston (10b), la seconde portion d'axe (10c) et la seconde tête d'étanchement (22b).

7. Unité d'usinage selon la revendication 6,
**caractérisée en ce que**
l'étage d'engrenage commutable est conçu pour être commuté par des différences de pression engendrées par voie hydraulique et/ou pneumatique entre le premier et le second canal (23a, 23b).

8. Unité d'usinage selon l'une des revendications précédentes,
**caractérisée en ce que**
le mécanisme d'entraînement comprend un étage d'engrenage à lot de pignons baladeurs, comportant un lot de pignons baladeurs qui comprend deux pignons droits (9, 12), un premier pignon droit (9) du lot de pignons baladeurs étant agencé solidairement en rotation sur l'arbre d'entraînement (8) du moteur de broche (7), et un second pignon droit (12) du lot de pignons baladeurs qui vient s'engager dans le premier pignon droit (9) est agencé solidairement en rotation sur l'arbre creux (11) monté mobile en translation.

9. Unité d'usinage selon l'une des revendications précédentes,
**caractérisée en ce que**
l'étage d'engrenage commutable comprend une première paire de pignons droits (13, 16 ; 12, 16) pour un premier rapport de transmission et une seconde paire de pignons droits (14, 17) pour un second rapport de transmission.

10. Unité d'usinage selon la revendication 9,
**caractérisée en ce que**
la première paire de pignons droits comprend un troisième pignon droit (13) qui est agencé solidairement en rotation sur l'arbre creux (11) monté mobile en translation, et la seconde paire de pignons droits comprend un quatrième pignon droit (14) qui est agencé solidairement en rotation sur l'arbre creux (11) monté mobile en translation ; ou
la première paire de pignons droits comprend le second pignon droit (12), et la seconde paire de pignons droits comprend un quatrième pignon droit (14) qui est agencé solidairement en rotation sur l'arbre creux (11) monté mobile en translation.

11. Unité d'usinage selon l'une des revendications précédentes,
**caractérisée en ce que**
la tête pivotante (3) présente un arbre intermédiaire (15) qui est orienté parallèlement à l'axe de pivotement (B) de la tête pivotante,
le mécanisme d'entraînement comprend un étage d'engrenage à pignon conique, et
un premier pignon conique (18) de l'étage d'engrenage à pignon conique est agencé solidairement en rotation sur l'arbre intermédiaire (15), et
un second pignon conique (20) de l'étage d'engrenage à pignon conique pour entraîner la broche de travail (6) est agencé solidairement en rotation sur l'arbre d'entraînement (19) de la broche de travail (6).

12. Unité d'usinage selon l'une des revendications précédentes,
**caractérisée en ce que**
la tête pivotante (3) présente une roue dentée d'axe de pivotement (26) qui est agencée coaxialement à l'axe de pivotement (B), et
l'unité d'usinage comprend un moteur d'axe de rotation (33) agencé sur le porte-tête (2) et une ou plusieurs unités de transmission (35) en engagement avec la roue dentée d'axe de pivotement (26) pour transmettre le mouvement de rotation d'un arbre d'entraînement (32) du moteur d'axe de rotation (33) à la roue dentée d'axe de pivotement (26), ladite au moins une ou les plusieurs unités de transmission (35) étant entraînées par une courroie dentée commune (30) qui est en engagement avec une roue dentée (31) sur l'arbre d'entraînement (32) du moteur d'axe de rotation (33).

13. Unité d'usinage selon la revendication 12,
**caractérisée en ce que**
l'unité d'usinage comprend deux unités de transmission (35) en engagement avec la roue dentée d'axe de pivotement (26) pour transmettre le mouvement de rotation de l'arbre d'entraînement (32) du moteur d'axe de rotation (33) à la roue dentée d'axe de pivotement (26), les deux unités de transmission (35) étant entraînées par une courroie dentée commune (30),
chacune des deux unités de transmission (35) comprenant un axe principal respectif (29) qui est agencé parallèlement à l'arbre d'entraînement (32) du moteur d'axe de rotation (33), les deux axes principaux (29) et l'arbre d'entraînement (32) du moteur d'axe de rotation (33) étant agencés sensiblement de façon équidistante l'un de l'autre, de telle sorte que la courroie dentée (30) prend sensiblement une forme qui correspond à un triangle équilatéral.

14. Unité d'usinage selon la revendication 12 ou 13, **caractérisée en ce que** le moteur d'axe de rotation (33) est agencé sur le côté de ladite une ou des plusieurs unités de transmission (35) qui est détourné de l'axe de pivotement (B) et,
le moteur d'axe de rotation (33) et le moteur de broche (7) sont agencés sur des côtés de l'axe de pivotement (B) opposés l'un à l'autre,
l'arbre d'entraînement (32) du moteur d'axe de rotation (33) est agencé parallèlement à l'axe de pivotement (B), et
l'arbre d'entraînement (32) du moteur d'axe de rotation (33) et l'arbre d'entraînement (8) du moteur de broche (7) définissent un plan commun avec l'axe de pivotement (B), et l'axe de pivotement (B) est agencé entre les deux arbres d'entraînement (8, 32).

15. Machine-outil comportant une unité d'usinage selon l'une des revendications précédentes, l'unité d'usinage étant montée sur la machine-outil de façon mobile le long d'au moins un axe de coordonnées.
